# EUROPEAN PATENT SPECIFICATION

(11) **EP 3 077 238 B1**
(45) Date of publication and mention of the grant of the patent: **14.11.2018**
(21) Application number: 14824787.7
(22) Date of filing: 05.12.2014
(51) Int. Cl.: B60J 5/04, B60J 5/10, B62D 29/00

(54) **BODY PART OF A MOTOR VEHICLE AND MOTOR VEHICLE INCLUDING THE SAME**
KAROSSERIETEIL EINES KRAFTFAHRZEUGES UND KRAFTFAHRZEUG DAMIT
PARTIE DE CARROSSERIE D'UN VÉHICULE À MOTEUR, ET VÉHICULE À MOTEUR LA COMPRENANT

(30) Priority: 06.12.2013 CN 201320800941 U
(43) Date of publication of application: 12.10.2016
(73) Proprietor: Compagnie Plastic Omnium, 69007 Lyon (FR)
(72) Inventor: DEMANGE, Jean-Yves, F-01500 Amberieu En Bugey (FR)
(74) Representative: Remy, Vincent Noel Paul
(86) International application number: PCT/EP2014/076710
(87) International publication number: WO 2015/082681

(56) References cited:
- WO-A1-03/016101
- DE-C1- 4 028 895
- US-A- 4 269 890
- US-A1- 2010 019 540

## Description

### Technical Field

The present invention relates to the field of motor vehicles, and more particularly to a body part of a motor vehicle and a motor vehicle including the same.

### Background

It is well-known that there are many motor vehicle body parts of a double panel structure, such as a hood, a tailgate (for a hatchback), a trunk lid (for a sedan), a rear spoiler, side doors or a roof. These body parts are usually composed of structural components and appearance components (also known as covering components) assembled together, between which there are usually cavities. Since the appearance component is an aesthetic decorative part for a vehicle, any tiny superficial defect can cause diffuse reflection of light after painting and thereby damage the exterior aesthetic appeal. Thus, the appearance component should not have, on its surface, corrugations, rumples, edge nicks and other defects that destroy superficial appearance. High requirements are set for the configuration and manufacturing process of the above types of body parts.

One circumstance known in the prior art is that no supports for appearance components are provided in the cavities. It would not be a big problem if the appearance components are made of adequately rigid materials (such as metal): even though consumers press the appearance components, no obvious dents occur so that they subjectively feel the rigidity thereof is relatively large. In accordance with common consumers' mentality, such subjective feeling plays a significant role in purchasing decisions of consumers. More and more components, however, are made of plastic materials in order to reduce gross vehicle weight and save fuel consumption. Compared with conventional metals, plastic materials used for the appearance components tend to be slightly worse in terms of rigidity. If the appearance component is not supported at the space, then when a consumer presses the part corresponding to the space or when the appearance component undergoes great temperature changes (for instance, under the sun for a long time), the appearance component would move towards the direction of the space under the action of an external force or due to expansion effect, thereby resulting in a dent thereon. Such a dent would cause disadvantageous effects: on one hand, it may greatly affect consumers' subjective feeling on rigidity, leaving them an impression that the vehicle is poor in quality; on the other hand, defects (such as corrugations and rumples) may occur on the paint of the appearance components, which influences the aesthetic appeal of the vehicle. The above problems seem more severe when the appearance component is flat or substantially flat (namely, having a large radius of curvature).

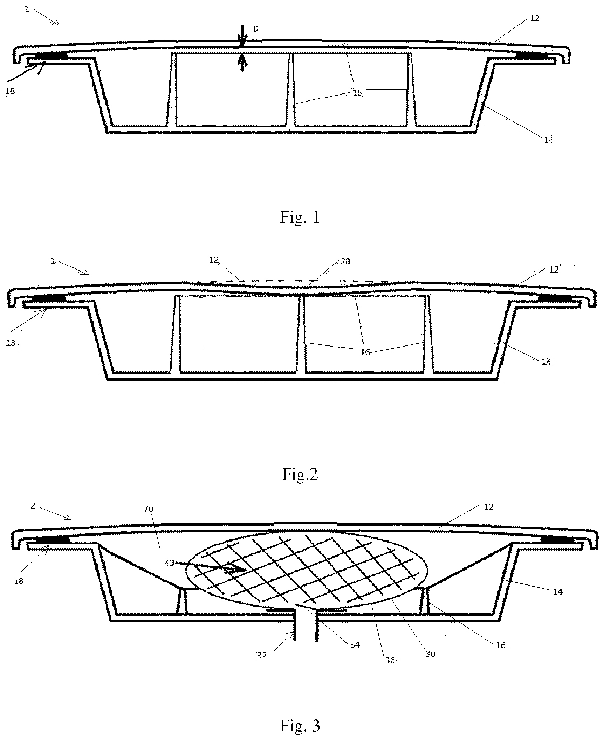

Another circumstance known in the prior art is shown in Figs. 1 and 2. A body part 1 as shown comprises an appearance component 12 and a structural component 14 that is assembled with the appearance component 12 at a peripheral part 18 by adhesive or other means. The structural component 14 has a plurality of reinforcing ribs 16. Assembly tolerance often exists during assembly, which usually means there is a gap D between the appearance component 12 and the reinforcing ribs 16 of the structural component 14. The presence of the gap results in that the appearance component 12 is not abutting against the reinforcing ribs 16 in its free state, and therefore cannot be effectively supported. When a consumer presses the appearance component, the appearance component would deform (into a shape as denoted by 12'), and may have a dent (as shown by an area 20 in Fig. 2) as stated above but to a less extent because the lower surface of the appearance component would be supported when contacting the reinforcing ribs, so as to prevent further sinking. The dents, though less serious, may cause the above-mentioned disadvantageous effects more or less.

Reference may be made to the documents like DE 4028895 C1, WO 03/016101 A1 and US 4269890 A for some background information related to the present invention. Thus, it is required to provide a new reinforcing structure that can provide effective support to the appearance component (especially when made of plastic materials) irrespective of the assembly tolerance between the appearance component and the structural component covered thereby.

### Summary of the Invention

The object of the present invention is to provide a new motor vehicle body part, an appearance component of which is effectively supported and has no obvious dents under the action of an external force or when undergoing thermal expansion, thereby avoiding the above disadvantageous effects.

To this end, the present invention provides a motor vehicle body part comprising a structural component and an appearance component installed on the structural component, a space existing between the structural component and the appearance component, characterized in that the space contains a bag-like object, which includes a plurality of bag chambers connected by an elongated channel, and the bag chambers each are filled with expandable foam or gas so that each of the bag chambers at least partially contacts the structural component and the appearance component simultaneously.. In this case, the bag-like object expanded by the expandable foam or gas abuts against the structural component and contacts the appearance component so as to provide effective support thereto at several areas, which is especially suitable for a longer body part.. Thus, the appearance component will not have obvious dents under the action of an external force or when undergoing thermal expansion, thereby maintaining a good appearance. Additionally, foam or gas can expand freely in the bag-like object until it is in full contact with the appearance component and the structural component, so an assembly tolerance between the appearance component and the structural component can be compensated no matter how large the tolerance is (so long as the resulting gap between the two components ranges from 0.5 to 5mm, preferably from 0.5 to 3mm), and the appearance component can be effectively supported.

The term "structural component" herein has a common meaning in the motor vehicle field, i.e., a component that has a certain shape and structure and can bear a load.

The term "appearance component" herein, also known as "covering component", has a common meaning in the motor vehicle field, i.e., a motor vehicle component exposed to the outside and directly visible to consumers.

The term "bag-like object" herein refers to a pouch-shaped container which is usually flexible.

The term "expandable foam" herein refers to a material which can expand on its own to generate foams after leaving its container, and it is a product commercially available, for instance, commonly known as polyurethane foam.

Preferably, the bag-like object only occupies a part of the space so as to reduce the weight of the body part and decrease the amount of the expandable foam or gas to be filled in, for the sake of cost saving and reduction of energy consumption.

In one embodiment, the appearance component is a flat panel or approximate to a flat panel.

Preferably, the bag-like object has substantially the same volume before and after being filled with the expandable foam or gas, which means the material for making the bag-like object itself is not flexible and cannot deform like a balloon under pressure. Thus, the pressure necessary for expanding the bag-like object is relatively small, so the requirement for an injection apparatus is lower.

In one embodiment, the bag-like object is made of paper, a microporous fabric or a polyethylene film.

In one embodiment, the expandable foam is polyurethane .

The vehicle body parts according to the present invention can be a wing, a bumper, a floor, a pillar, a tailgate, a trunk lid, a hood, a rear spoiler, a side door or a roof of a motor vehicle.

The present invention also relate to a motor vehicle, characterized in that it includes at least one motor vehicle body part as stated above.

### Brief Description of the Drawings

The present invention will be described in more detail hereinafter with reference to the drawings. It should be readily appreciated by those skilled in the art that the drawings described herein are for illustration purposes only and are not intended to limit the scope of the present invention in any way. Identical or like structures are indicated with identical or like reference numerals. For illustration purposes, these drawings are not necessarily drawn in proportion.
Fig. 1 is a cross-sectional view of a body part in the prior art, wherein an appearance component is in a free state;
Fig. 2 is a cross-sectional view of the body part of Fig. 1, wherein the appearance component has a dent;
Fig. 3 is a cross-sectional view of the body part according to one embodiment of the present invention;
Fig. 4 shows a process of forming the body part according to another embodiment of the present invention;
Fig. 5 shows a process of forming the body part according to a further embodiment of the present invention;
Fig. 6 schematically shows the injection and expanding process of expandable foam according to the present invention in an enlarged view;
Fig. 7 is a perspective view of an embodiment of the body part according to the present invention;
Fig. 8 is a perspective view of another embodiment of the body part according to the present invention; and
Fig. 9 is a perspective view of a further embodiment of the body part according to the present invention.

### Detailed Description of the Preferred Embodiments

Figs 1 and 2 were described in the Background and will not be reiterated herein.

Fig. 3 shows a body part 2 according to an embodiment of the present invention. As can be seen, the body part comprises an appearance component 12 and a structural component 14 that is assembled with the appearance component 12 at a peripheral part 18 by adhesive or other means. The structural component 14 has a plurality of shorter reinforcing ribs 16. In the present embodiment, the appearance component 12 has a large radius of curvature (greater than 3000mm) and is a flat panel or approximate to a flat panel. Different from the prior art as shown in Figs. 1 and 2, a space 70 between the appearance component 12 and the structural component 14 contains a bag-like object 30, which is filled with expandable foam 40 so that the bag-like object at least partially contacts the structural component 14 and the appearance component 12 simultaneously. In this case, the bag-like object expanded by the expandable foam 40 abuts against the structural component 14 and contacts the appearance component 12 so as to provide effective support thereto. Thus, the appearance component will not have obvious dents under the action of an external force or when undergoing thermal expansion, thereby maintaining a good appearance. Additionally, foam can expand freely in the bag-like object until it is in full contact with the appearance component and the structural component, so an assembly tolerance between the appearance component and the structural component can be compensated no matter how large the tolerance is, and the appearance component is effectively supported. As can be seen, in the embodiment shown in Fig. 3, the bag-like object 30 includes an ellipsoid-shaped bag chamber 36 and a foam injection channel 32 connected with the bag chamber, and the channel includes a check valve 34. The foam injection channel 32 extends outward through an aperture in the structural component 14 so as to receive a nozzle of the foam injection apparatus.

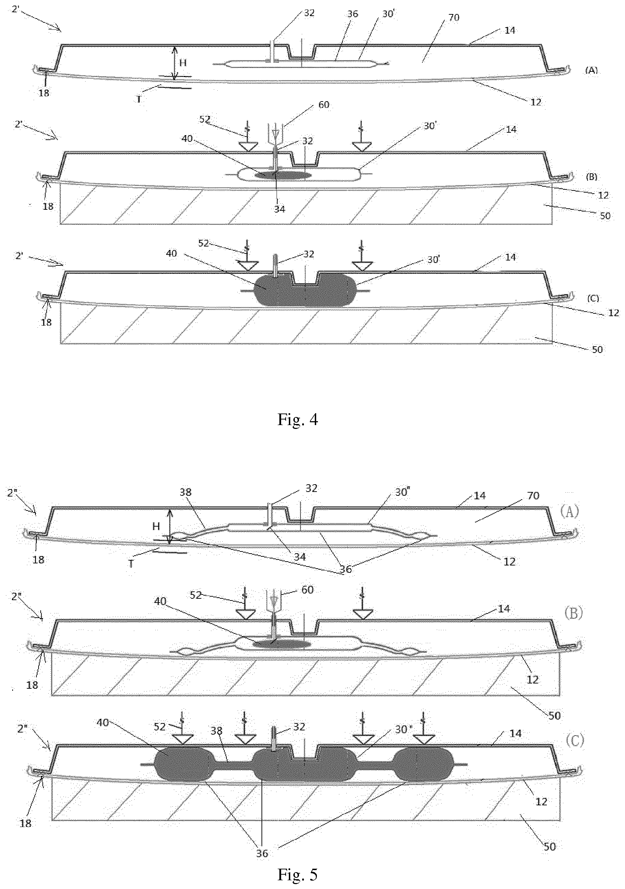

The process of forming the body part according to the present invention, especially the process of filling and expansion of the expandable foam in the space, will be explained in detail hereinafter with reference to Figs. 4 and 5. The two embodiments shown in Figs. 4 and 5 differ from the one shown in Fig. 3 in that the structural component 14 does not have reinforcing ribs, and the bag-like object has a different shape and configuration. The common parts will not be reiterated hereinafter for the sake of brevity. A bag-like object 30' included in a body part 2' in Fig. 4 comprises only one flat and long ellipsoid shaped bag chamber 36, whereas a bag-like object 30" included in a body part 2" in Fig. 5 comprises a plurality of flat and long ellipsoid shaped bag chambers 36 connected by an elongated channel 38.

The bag chamber 30' or 30" is disposed in place in the space between the appearance component 12 and the structural component 14 before the two components are assembled together. It should be appreciated that those skilled in the art can arrange the position of the bag chamber (which supports the appearance component after being expanded by the expansion foam) of the bag-like object in the space according to a stress design demand corresponding to subjective rigidity (namely, the rigidity subjectively felt by a consumer when pressing the appearance component), and also can reasonably arrange the number and position of the foam injection channels on the bag-like object, as well as the number and position of the apertures in the structural component or the appearance component for passage of the foam injection channels according to specific conditions. Figs. 4(A) and 5(A) respectively illustrate the cross-sectional view of the body part 2' and 2" after the assembly and before filling of the expandable foam. It can be seen that the foam injection channel 32 connected with the bag-like object 30' or 30" extends outward through an aperture in the structural component 14 so as to receive a nozzle of the foam injection apparatus. It can also be seen that the appearance component 12 at this time is in a free state and has a freedom in a direction perpendicular to the surface thereof, i.e., the distance H between the appearance component 12 and the structural component may vary within a certain range T.

Then, the body part 2' or 2" as shown in Figs. 4(A) and 5(A) is placed on a bracket 50. Herein, since the bracket 50 is in contact with the appearance component 12, it must be made of a material that would not do damage to the outer surface of the appearance component, and a protective layer, if necessary, can be laid between the bracket 50 and the appearance component 12. In the two embodiments as shown in Figs. 4 and 5, the bracket 50 is made of resin, but it can also be made of any other suitable material. Then, as shown in Figs. 4(B) and 5(B), the nozzle of the foam injection apparatus 60 is connected to the foam injection channel 32, the check valve 34 is opened to inject the expandable foam 40 (which is polyurethane in the present embodiment, but is not limited thereto) into the bag-like object 30' or 30", during which a holding device 52 is utilized to press the structural component 14 so as to prevent it from being bulged by the expanded foam. It should be appreciated that during the foam injection, foam will not flow back to the injection apparatus 60 due to the presence of the check valve 34. Injection continues until the bag chamber 36 expanded by the expanded foam at least partially contacts the appearance component 12 and the structural component 14 simultaneously, as shown in Figs. 4(C) or 5(C). The check valve 34 can be designed to automatically close under certain pressure which the expandable foam makes. It should be appreciated that the check valve 34 may be omitted by providing a simple access orifice on the bag-like object. In this case, as the expandable foam expands and becomes hard after leaving the injection apparatus, it can finally reach the access orifice and block it, thereby preventing the foam from flowing further back to the injection apparatus. It may be necessary to cut the overflow portion of the foam and then block the orifice with a cover.

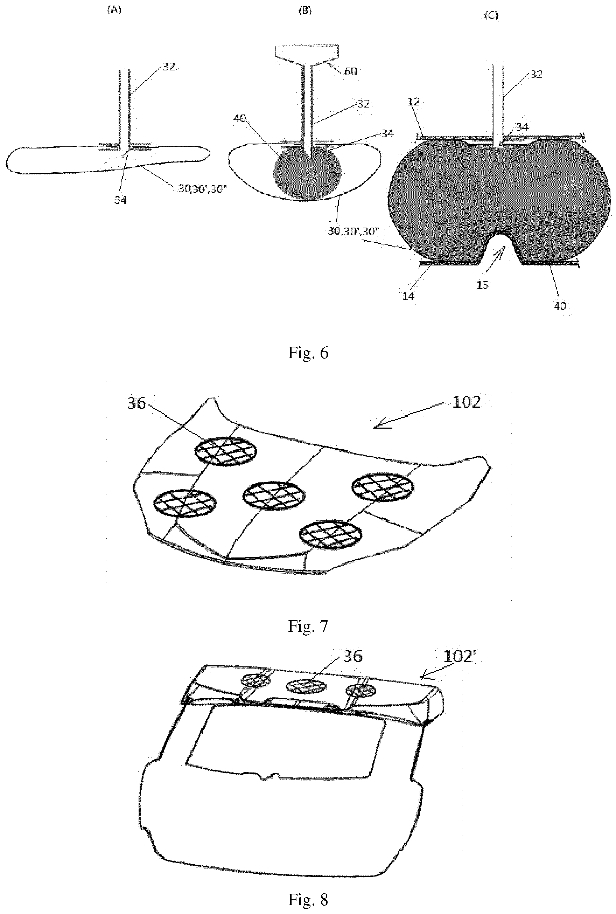

Fig. 6 shows the above process more clearly by an enlarged partial view. It can be seen from Fig. 6(A) that the bag-like object of certain flexibility, when empty, shrinks together to some extent due to lack of fillings. As the expandable foam fills in, the bag-like object is gradually expanded and deployed to its final shape. As Fig. 6(C) shows, flexibility of the bag-like object makes it possible to fit well with the shape of the component contacted thereby (for example, a dent 15 of the structural component 14). It should be noted that in the embodiment of Fig. 6, the expandable foam injection channel is arranged on the side of the appearance component 12.

It should be appreciated that in the above embodiments, the bag-like object is a pouch-shaped container, which is usually flexible. Preferably, the material itself for making the bag-like object has no elasticity and cannot deform like a balloon under pressure, such as paper (which can be deployed like a vacuum cleaner paper bag), a microporous fabric or a polyethylene film. In other words, the bag-like object has substantially the same internal volume before and after being filled with the expandable foam. Thus, the pressure necessary for expanding the bag-like object is relatively small, so the requirement for a foam injection apparatus is lower. Of course, it is also possible to make the bag-like object of a material having elasticity itself. In addition, what should be emphasized is that the bag-like object according to the present invention may include more than one bag chamber (as shown in the embodiment of Fig. 5), and these bag chambers may be of any suitable shape, such as ellipsoid-shaped (as shown in the embodiment of Fig. 3), sphere, flat and long ellipsoid shaped (as shown in the embodiments of Figs. 4 and 5), gengon and cuboid. In addition, these bag chambers after being expanded by the expandable foam can fill up the entire space, but it would not be necessary in most cases. Bag chambers only need to be arranged at several places in the space out of the consideration of weight reduction and cost saving, i.e., preferably, the bag-like chamber only occupies a portion of the space. The positions of the bag chambers in the space usually correspond to the supporting points of the appearance components, and these points are often arranged in the areas requiring high subjective rigidity. Those skilled in the art can select the supporting points according to particular applied occasions, thereby determining the positions for bag chambers accordingly. It should also be understood that the foam injection channel can be arranged not only at the side of the structural component, but also at the side of the appearance component (as shown in the embodiment of Fig. 6) in the case of which the apertures in the appearance component should be arranged in concealed areas that are difficult to be seen by consumers, and sealed well.

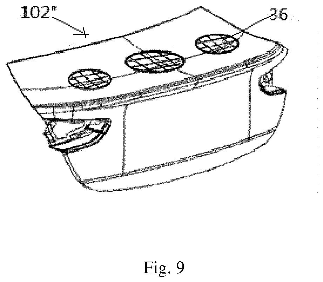

Figs. 7 to 9 show three exemplary embodiments of the body part according to the present invention, which are a hood 102, a tailgate 102' and a trunk lid 102" respectively. The ovals with gridlines in these drawings schematically show the bag chambers 36 filled with expandable foam. These bag chambers could be discrete or connected together by elongated channels, which can be designed by those skilled in the art according to specific conditions. It should be understood, however, that Figs. 7 to 9 are only for illustration purposes. The body parts according to the present invention are not limited thereto, and could also be for example a wing, a bumper, a floor, a pillar, side doors or a roof of a vehicle.

It should be appreciated that the expandable foam used in the above embodiments may be replaced by a suitable gas, which should be safe in this application, such as an inert gas. Accordingly, the bag-like object should be adapted to the gas, particularly in terms of permeability.

The drawings and the above description describe the non-limitative particular embodiments of the present invention. Some conventional aspects have been simplified or omitted in teaching the invention principle. Those skilled in the art should know that the variations from these embodiments fall into the scope of the present invention. It should be understood by those skilled in the art that the above features can be combined in various ways to form a plurality of variations of the present invention. Thus, the present invention is not limited to the above particular embodiments, but defined by the following claims.

## Claims

1. A motor vehicle body part (2") comprising a structural component (14) and an appearance component (12) installed on the structural component (14), a space (70) existing between the structural component (14) and the appearance component (12), wherein the space (70) contains a bag-like object (30"), **characterized in that** the bag-like object includes a plurality of bag chambers (36) connected by an elongated channel (38), and the bag chambers (36) each are filled with expandable foam (40) or gas so that each of the bag chambers (36) at least partially contacts the structural component (14) and the appearance component (12) simultaneously.

2. The motor vehicle body part (2") according to claim 1, **characterized in that** the bag-like object (30") only occupies a portion of the space (70).

3. The motor vehicle body part (2") according to claim 1, **characterized in that** the appearance component (12) is a flat panel or approximate to a flat panel.

4. The motor vehicle body part (2") according to any one of claims 1 to 3, **characterized in that** the bag-like object (30") has substantially the same volume before and after being filled with the expandable foam or gas.

5. The motor vehicle body part (2") according to claim 4, **characterized in that** the bag-like object (30") is made of paper, a microporous fabric or a polyethylene film.

6. The motor vehicle body part (2") according to any one of claims 1 to 3, **characterized in that** the expandable foam (40) is polyurethane.

7. The motor vehicle body part (2") according to any one of claims 1 to 3, **characterized in that** it is a wing, a bumper, a floor, a pillar, a tailgate, a trunk lid, a hood, a rear spoiler, a side door or a roof of a motor vehicle.

8. A motor vehicle, **characterized in that** it includes at least one motor vehicle body part according to any one of the preceding claims.

## Patentansprüche

1. Kraftfahrzeugkarosserieteil (2"), das eine Strukturkomponente (14) und eine ästhetische Komponente (12), die an der Strukturkomponente (14) installiert ist, umfasst, wobei ein Raum (70) zwischen der Strukturkomponente (14) und der ästhetischen Komponente (12) vorhanden ist, wobei der Raum (70) ein sackartiges Objekt (30") enthält, **dadurch gekennzeichnet, dass** das sackartige Objekt mehrere Sackkammern (36) enthält, die durch einen länglichen Kanal (38) verbunden sind, und die Sackkammern (36) jeweils mit aufschäumbarem Schaum (40) oder Gas gefüllt sind, so dass jede der Sackkammern (36) mindestens teilweise die Strukturkomponente (14) und die ästhetische Komponente (12) gleichzeitig berührt.

2. Kraftfahrzeugkarosserieteil (2") nach Anspruch 1, **dadurch gekennzeichnet, dass** das sackartige Objekt (30") nur einen Abschnitt des Raums (70) belegt.

3. Kraftfahrzeugkarosserieteil (2") nach Anspruch 1, **dadurch gekennzeichnet, dass** die ästhetische Komponente (12) ein flaches Paneel oder ungefähr ein flaches Paneel ist.

4. Kraftfahrzeugkarosserieteil (2") nach einem der Ansprüche 1 bis 3, **dadurch gekennzeichnet, dass** das sackartige Objekt (30") vor und nach dem Befüllen mit dem aufschäumbaren Schaum oder Gas im Wesentlichen das gleiche Volumen hat.

5. Kraftfahrzeugkarosserieteil (2") nach Anspruch 4, **dadurch gekennzeichnet, dass** das sackartige Objekt (30") aus Papier, einem Mikroporengewebe oder einem Polyethylenfilm hergestellt ist.

6. Kraftfahrzeugkarosserieteil (2") nach einem der Ansprüche 1 bis 3, **dadurch gekennzeichnet, dass** der aufschäumbare Schaum (40) Polyurethan ist.

7. Kraftfahrzeugkarosserieteil (2") nach einem der Ansprüche 1 bis 3, **dadurch gekennzeichnet, dass** es ein Kotflügel, ein Stoßfänger, ein Boden, eine Säule, eine Heckklappe, ein Kofferraumdeckel, eine Motorhaube, ein Heckspoiler, eine Seitentür oder ein Dach eines Kraftfahrzeugs ist.

8. Kraftfahrzeug, **dadurch gekennzeichnet, dass** es mindestens ein Kraftfahrzeugkarosserieteil nach einem der vorangehenden Ansprüche umfasst.

## Revendications

1. Une partie de carrosserie (2") d'un véhicule à moteur comprenant un composant structurel (14) et un composant d'aspect (12) installé sur le composant structurel (14), un espace (70) existant entre le composant structurel (14) et le composant d'aspect (12), dans laquelle l'espace (70) contient un objet en forme de poche (30"), **caractérisée en ce que** l'objet en forme de poche comprend une pluralité de chambres de poche (36) reliées par un canal allongé (38), et les chambres de poche (36) sont chacune remplies de mousse expansive (40) ou de gaz de sorte que chacune des chambres de poche (36) est au moins partiellement en contact avec le composant structurel (14) et le composant d'aspect (12) simultanément.

2. La partie de carrosserie (2") d'un véhicule à moteur selon la revendication 1, **caractérisée en ce que** l'objet en forme de poche (30") n'occupe qu'une partie de l'espace (70).

3. La partie de carrosserie (2") d'un véhicule à moteur selon la revendication 1, **caractérisée en ce que** le composant d'aspect (12) est un panneau plat ou presque plat.

4. La partie de carrosserie (2") d'un véhicule à moteur selon l'une quelconque des revendications 1 à 3, **caractérisée en ce que** l'objet en forme de poche (30") a sensiblement le même volume avant et après avoir été rempli avec la mousse expansive ou le gaz.

5. La partie de carrosserie (2") d'un véhicule à moteur selon la revendication 4, **caractérisée en ce que** l'objet en forme de poche (30") est en papier, un tissu microporeux ou un film polyéthylène.

6. La partie de carrosserie (2") d'un véhicule à moteur selon l'une quelconque des revendications 1 à 3, **caractérisée en ce que** la mousse expansive (40) est du polyuréthane.

7. La partie de carrosserie (2") d'un véhicule à moteur selon l'une quelconque des revendications 1 à 3, **caractérisée en ce qu'**il s'agit d'une aile, d'un pare-choc, d'un plancher, d'un pied, d'un hayon, d'un couvercle de coffre, d'un capot, d'un becquet arrière, d'une porte latérale ou d'un toit d'un véhicule à moteur.

8. Un véhicule à moteur, **caractérisé en ce qu'**il comprend au moins une partie de carrosserie d'un véhicule à moteur selon l'une quelconque des revendications précédentes.
